Europäisches Patentamt

European Patent Office

Office européen des brevets

(19)

(11) Veröffentlichungsnummer: **0 203 420**
**B1**

(12) **EUROPÄISCHE PATENTSCHRIFT**

(45) Veröffentlichungstag der Patentschrift: **05.09.90**

(51) Int. Cl.⁵: **G 11 B 5/53**

(21) Anmeldenummer: **86106153.9**

(22) Anmeldetag: **06.05.86**

(54) Gerät, insbesondere Videorecorder.

(30) Priorität: **14.05.85 DE 3517267**

(43) Veröffentlichungstag der Anmeldung:
**03.12.86 Patentblatt 86/49**

(45) Bekanntmachung des Hinweises auf die
Patenterteilung:
**05.09.90 Patentblatt 90/36**

(84) Benannte Vertragsstaaten:
**AT BE CH DE FR GB IT LI LU NL SE**

(56) Entgegenhaltungen:
EP-A- 204 956
DE-A-3 115 670
DE-B-1 437 588
GB-A-1 450 681
GB-A-2 043 306
GB-A-2 145 271

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **Keesen, Werner, Dr.-Ing.
Tiestestrasse 5
D-3000 Hannover 1 (DE)**
Erfinder: **Oberjatzas, Günter, Dipl.-Ing.
Langenkampstrasse 42
D-3013 Barsinghausen (DE)**
Erfinder: **Hartnack, Wolfgang, Dipl.-Ing.
Saarstrasse 22
D-3005 Hemmingen 1 (DE)**
Erfinder: **Habben, Dieter, Dipl.-Ing.
Röntgenstrasse 13
D-3000 Hannover 1 (DE)**
Erfinder: **Schäfer, Ralf-Detlef, Dipl.-Ing.
Im Bultfeld 44
D-3005 Hemmingen 4 (DE)**
Erfinder: **Peters, Hartmut, Dipl.-Ing.
Wilh. Bluhmstrasse 37
D-3000 Hannover 91 (DE)**
Erfinder: **Westerkamp, Dietrich, Dr.-Ing.
Sallstrasse 51
D-3000 Hannover 1 (DE)**

**EP 0 203 420 B1**

(74) Vertreter: **Einsel, Robert, Dipl.-Ing.**
**Deutsche Thomson-Brandt GmbH Patent- und**
**Lizenzabteilung Göttinger Chaussee 76**
**D-3000 Hannover 91 (DE)**

## Beschreibung

Die Erfindung betrifft ein Gerät, insbesondere einen Videorecorder, gemäß dem Oberbegriff des Patentanspruchs 1.

Aus der DE-OS 31 15 670 ist ein Verfahren bekannt, die Winkellage der Magnetköpfe zum Band zu bestimmen. Auf einer rotierenden Kopfradscheibe sind neben den beiden Magnetköpfen zwei Permanentmagnete angeordnet, die während der Rotation in einem stationären Kopf oder in einer stationären Spule außerhalb des Kopfes, fest eingesetzt in einer Kopfradumgebung, Impulse wechselnder Polarität erzeugen. Die Impulse dienen als Kriterium für die jeweilige Stellung und Geschwindigkeit der Kopfradscheibe (Seite 6, 1.Absatz). Nachteilig werden mit hohem Fertigungsaufwand die Permanentmagnete im Kopfrad untergebracht und in ihrer Winkellage zu den Köpfen justiert.

Der Erfindung liegt die Aufgabe zugrunde, eine einfache Einrichtung zu schaffen, die eine Winkelposition der Kopfradscheibe bestimmt.

Die Aufgabe wird durch die im Patentanspruch 1 angegebenen Merkmale gelöst. Vorteilhafte Weiterbildungen der Erfindung sind in Unteransprüchen angegeben.

In der prioritätsgleichen europäischen Patentanmeldung Nr. 86 106 154.7 (Veröffentlichung EP-A 204956) der Anmelderin wird beansprucht, daß bei einem Gerät der beschriebenen Art mindestens zwei Geber über eine Höhe in der Axialrichtung der Kopfradscheibe unterschiedlich wirksam sind.

Wird ein Geber, der eine Winkellage einer Kopfradscheibe anzeigt, ortsfest in einem Chassis oder in einem stationären Umfeld in der Nähe zur Kopfradscheibe angeordnet, so genügen der oder die für das Lesen und Aufzeichnen verwendeten Magnetköpfe auf der rotierenden Kopfradscheibe, um gleichzeitig anhand eines von dem Geber induzierten Impulses die Winkellage zu bestimmen. Vorteilhaft kann auf den Einbau eines weiteren Sensors, speziell eines Magnetkopfes, im Rahmen verzichtet werden.

Zum besseren Verständnis der Erfindung wird nachstehend ein Ausführungsbeispiel anhand von Zeichnungen näher erläutert.

Es zeigt

Fig. 1 eine Kopfradscheibe

Fig. 2 einen Löschkopf mit Doppelspalt

Fig. 3 einen Impuls von einem Löschkopf mit Doppelspalt.

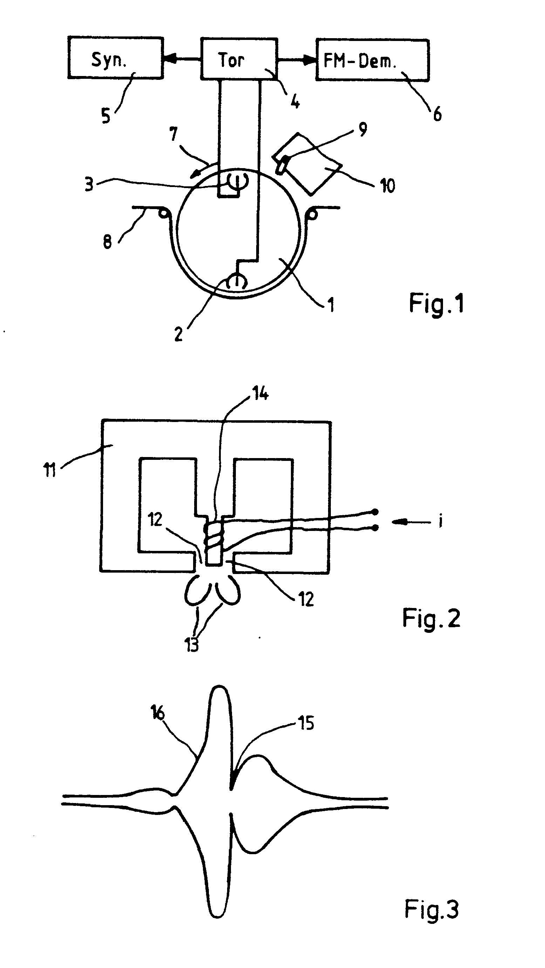

Fig. 1 zeigt eine Kopfradscheibe mit zwei Magnetköpfen 2,3. Die Magnetköpfe geben Signale auf eine Torschaltung 4, die die Signale nach aufgezeichneten Signalen, im folgenden Video-Nutzsignale genannt, und Synchronsignalen, die vom Geber 9 erzeugt werden, trennt und an eine Synchronverarbeitung 5 und einen FM-Demodulator 6 weitergibt. Das Video-Nutzsignal, ein mit dem Videosignal frequenzmodulierter Träger, wird im FM-Demodulator weiterverarbeitet. Die Trennung von Nutz- und Synchronsignal geschieht aufgrund der Amplitude und/oder der Frequenz. Die Kopfradscheibe 1 rotiert in Richtung 7. Das Magnetband 8 umschließt die Kopfradscheibe in einem Winkel von mehr als 180°. Ein Magnet 9, der ortsfest auf einem Chassis 10 angeordnet ist, induziert in den Köpfen 2 und 3 einen Impuls. Anhand des bzw. der Impulse läßt sich eine Winkellage der Köpfe und eine Rotationsgeschwindigkeit der Kopfradscheibe 1 bestimmen. Vorteilhaft kann anstelle eines Magneten 9 ein Draht verwendet werden, der von einem Strom durchflossen wird. Dieser Strom wechselt mit hoher Frequenz, die etwa bei 6 MHz liegt, seine Polarität. Des weiteren kann vorteilhaft der Magnet 9 durch einen Magnetkopf, speziell durch einen Löschkopf mit Doppelspalt ersetzt werden.

Fig. 2 zeigt einen Löschkopf 11 mit Doppelspalt 12 und zwei Magnetfeldern 13. Der Strom i, der die Magnetfelder 13 mit Hilfe einer Spule 14 erzeugt, wechselt mit hoher Frequenz, die etwa bei 6 MHz liegt, die Polarität. Der Löschkopf 11 mit Doppelspalt 12 erzielt in den beiden Magnetköpfen 2,3 einen Impuls gemäß Fig. 3. Der Einschnitt 15 in der Hüllkurve 16 läßt sich exakt bestimmen und definiert eine Winkellage der Magnetköpfe auf der Kopfradscheibe 1.

Zur Vermeidung einer Störung des Aufnahme oder Wiedergabesignals durch Positionsinformationssignale ist jedem Kopf 2, 3 ein gesonderter Übertrager zugeordnet, so daß Aufnahme oder Wiedergabesignale zugleich mit den Positionsinformationssignalen verarbeitet werden können, ohne daß sich diese gegenseitig stören.

## Patentansprüche

1. Gerät, insbesondere Videorecorder, zur Aufzeichnung und/oder Wiedergabe von Signalen auf oder von einem bandförmigen Aufzeichnungsträger (8), insbesondere für ein Digitalsignal auf einem Magnetband (8), mit einer Kopfradscheibe (1), mit einem oder mehreren Köpfen (2, 3) sowie einem System aus Geber (9) und Empfänger (2, 3) an dem ortsfesten Chassis (10) bzw. der Kopfradscheibe (1), das einen die jeweilige Winkellage der Kopfradscheibe anzeigenden Impuls (Fig. 3) erzeugt, dadurch gekennzeichnet, daß der oder die Geber (9) ortsfest am Chassis (10) angeordnet sind und auf einen oder mehrere Köpfe (2, 3) als Empfänger einwirken, aus dessen oder deren Ausgangssignal der Impuls (Fig. 3) abgeleitet ist.

2. Gerät nach Anspruch 1, dadurch gekennzeichnet, daß ein Geber (9) auf dem Chassis (10) angeordnet ist.

3. Gerät nach Anspruch 2, dadurch gekennzeichnet, daß der Geber (9) ein Magnet (11) ist.

4. Gerät nach Anspruch 2, dadurch gekennzeichnet, daß der Geber (9) ein Magnetkopf ist.

5. Gerät nach Anspruch 4, dadurch gekennzeichnet, daß der Magnetkopf (11) einen Doppelspalt (12) hat.

6. Gerät nach Anspruch 4 und/oder 5, dadurch gekennzeichnet, daß der Geber (9) ein Löschkopf (11) ist.

7. Gerät nach einem oder mehreren der vorhergehenden Ansprüche, dadurch gekennzeichnet, daß der Geber (9) von einem Strom (i) gesteuert ist.

8. Gerät nach Anspruch 2, dadurch gekennzeichnet, daß der Geber (9) ein Draht ist.

9. Gerät nach Anspruch 8, dadurch gekennzeichnet, daß der Draht von einem Strom durchflossen ist.

10. Gerät nach Anspruch 7 und/oder 9, dadurch gekennzeichnet, daß der Strom (i) mit hoher Frequenz seine Polarität wechselt.

11. Gerät nach Anspruch 10, dadurch gekennzeichnete, daß die hohe Frequenz in der Größenordnung von 6 MHz liegt.

12. Gerät nach einem oder mehreren der vorhergehenden Ansprüche, dadurch gekennzeichnet, daß das vom Geber kommende Signal so bemessen ist, daß es von einem mit dem Videosignal frequenzmodulierten Träger unterscheidbar ist.

13. Gerät nach einem oder mehreren der Ansprüche 1-12, dadurch gekennzeichnet, daß jedem Kopf (2, 3) ein gesonderter Übertrager zugeordnet ist.

**Revendications**

1. Appareil, notamment enregistreur vidéo, servant à enregistrer et/ou lire des signaux sur ou à partir d'un support d'enregistrement en forme de bande (8), notamment pour un signal numérique sur une bande magnétique (8), comportant un disque porte-têtes (1) possédant une ou plusieurs têtes (2, 3), ainsi qu'un système formé d'un émetteur (9) et d'un récepteur (2, 3), sur le châssis fixe (10) ou sur le disque porte-têtes (1), ce système produisant une impulsion indiquant la position angulaire respective du disque porte-têtes (figure 3), caractérisé en ce que le ou les émetteurs (9) sont montés fixes sur le châssis (10) et agissent sur une ou plusieurs têtes (2, 3) formant récepteur et à partir du signal de sortie de la ou desquelles est dérivée l'impulsion (figure 3).

2. Appareil selon la revendication 1, caractérisé en ce qu'un émetteur (9) est monté sur le châssis (10).

3. Appareil selon la revendication 2, caractérisé en ce que l'émetteur (9) est un aimant (11).

4. Appareil selon la revendication 2, caractérisé en ce que l'émetteur (9) est une tête magnétique.

5. Appareil selon la revendication 4, caractérisé en ce que la tête magnétique (11) possède un entrefer double (11).

6. Appareil selon la revendication 4 et/ou 5, caractérisé en ce que l'émetteur (9) est une tête d'effacement (11).

7. Appareil selon une ou plusieurs des revendications précédentes, caractérisé en ce que l'émetteur (9) est commandé par un courant (i).

8. Appareil selon la revendication 2, caractérisé en ce que l'émetteur (9) est un fil.

9. Appareil selon la revendication 8, caractérisé en ce que le fil est parcouru par un courant.

10. Appareil selon la revendication 7 et/ou 9, caractérisé en ce que la polarité du courant (i) change avec une fréquence élevée.

11. Appareil selon la revendication 10, caractérisé en ce que la haute fréquence est de l'ordre de 6 MHz.

12. Appareil selon une ou plusieurs des revendications précédentes, caractérisé en ce que le signal délivré par l'émetteur est dimensionné de manière à pouvoir être distingué d'un support modulé en fréquence par le signal vidéo.

13. Appareil selon une ou plusieurs des revendications 1-12, caractérisé en ce qu'un transformateur particulier est associé à chaque tête (2, 3).

**Claims**

1. Apparatus, especially a video recorder for the recording and/or reproduction of signals on or from a tape-like recording carrier (8), especially for a digital signal on a magnetic tape (8), with a head wheel disc (1), with one or more heads (2, 3) and a pick-off (9) and receiver (2, 3) system on the fixed chassis (10) or the head wheel disc (10) the system producing a pulse (Fig. 3) indicating the current angular position of the head wheel disc, characterised in that the pick-off(s) (9) are arranged fixed on the chassis (10) and act upon one or more heads (2, 3) as receiver(s), from the output signal of which is derived the pulse (Fig. 3).

2. Apparatus according to claim 1, characterised in that one pick-off (9) is arranged on the chassis (10).

3. Apparatus according to claim 2, characterised in that the pick-off (9) is a magnet (11).

4. Apparatus according to claim 2, characterised in that the pick-off (9) is a magnetic head.

5. Apparatus according to claim 4, characterised in that the magnetic head (11) has a double gap (12).

6. Apparatus according to claim 4 and/or 5, characterised in that the pick-off (9) is an erase head (11).

7. Apparatus according to one or more of the preceding claims, characterised in that the pick-off (9) is controlled by a current (i).

8. Apparatus according to claim 2, characterised in that the pick-off (9) is a wire.

9. Apparatus according to claim 8, characterised in that a current flows through the wire.

10. Apparatus according to claim 7 and/or 9, characterised in that the current (i) changes its polarity at a high frequency.

11. Apparatus according to claim 10, characterised in that the high frequency is of the order of magnitude of 6 MHz.

12. Apparatus according to one or more of the preceding claims, characterised in that the signal coming from the pick-off is of a magnitude such that it is distinguishable from a carrier frequency-modulated with the video signal.

13. Apparatus according to one or more of claims 1-12, characterised in that each head (2, 3) has a respective transformer associated therewith.

Fig.1

Fig.2

Fig.3